# EUROPEAN PATENT APPLICATION

(11) **EP 4 592 486 A1**
(43) Date of publication of application: **30.07.2025**
(21) Application number: 24190261.8
(22) Date of filing: 23.07.2024
(51) Int. Cl.: E05F 15/689

(54) **WINDOW REGULATOR**

(30) Priority: 29.01.2024 KR 20240013575
(71) Applicant: PHA CO., LTD., Dalseo-gu, Daegu 42724 (KR)
(72) Inventor: JEON, Chan Joo, 15866 Gyeonggi-do (KR)
(74) Representative: Zacco Sweden AB

(57) **Abstract**

The present invention relates to a window regulator, and includes a guide rail provided inside a door, a pulley bracket that is fixed to the guide rail and to which a pulley that changes a moving direction of a cable is axially coupled, and a stress distribution unit configured to distribute a stress applied to the pulley.

## Description

### BACKGROUND

### 1. Field

The present invention relates to a window regulator, and more particularly, to a window regulator having improved durability and improved assemblability by resolving a stress concentration caused by tension of a cable.

### 2. Description of the Related Art

In general, in order to open and close a window by raising and lowering the glass mounted on a vehicle door, a window regulator module is installed inside the vehicle door, and the window regulator module is mounted on a module panel installed inside the vehicle door.

A rail is formed on a surface of the module panel along a top-bottom direction of the door, pulleys are installed at both ends of the rail, and a drum that rotates in a forward or reverse direction by a drive motor is installed between upper and lower pulleys.

In the drum, two cables each having one end fixed are wound in opposite directions, the directions of the cables are changed by the upper and lower pulleys, and the other ends of the cables are fixed to a carrier plate connected to the rail to be disposed between the upper and lower pulleys.

When the drum is rotated by a driving motor, the cables wound around the drum are wound or unwound, the rotational movement of the drum is converted into a linear movement of the cable accordingly, and the glass fixed to the carrier plate through a clamp is raised or lowered while the carrier plate is guided by the rail depending on a rotational direction of the drum.

The window regulator in the related art has a problem in that a stress occurs in the pulleys, pulley shafts, and rail due to the tension of the cables acting toward the center of the rail, and creep rupture occurs in the rail due to the stress.

Therefore, there is a need to improve the problem.

The background technology of the present invention is disclosed in Korean Patent Registration No. 10-1425921 (registered on July 28, 2014, title of invention: Window regulator for vehicles with improved pulley mounting structure).

### SUMMARY

The present invention has been conceived to improve the problem described above, and is directed to providing a window regulator having improved durability and improved assemblability by resolving a stress concentration caused by tension of a cable.

According to an aspect of the present invention, there is provided a window regulator including a guide rail provided inside a door, a pulley bracket that is fixed to the guide rail and to which a pulley that changes a moving direction of a cable is axially coupled, and a stress distribution unit configured to distribute a stress applied to the pulley.

In addition, the window regulator may include a fixing unit configured to fix the pulley bracket to the guide rail, and the fixing unit may include a first fixing portion that fixes an upper end of the pulley bracket and a second fixing portion that fixes a lower end of the pulley bracket.

In addition, the first fixing portion may include a first fixing hole opening in an upward direction of the guide rail and a first fixing protrusion formed on the upper end of the pulley bracket to be inserted into the first fixing hole, and the second fixing portion may include a second fixing protrusion formed to protrude from the guide rail in the upward direction and a second fixing hole formed in the pulley bracket so that the second fixing protrusion is inserted.

In addition, the fixing unit may include a stress support portion that supports a stress generated by tension of the cable.

In addition, the stress support portion may include a support flange formed at the lower end of the pulley bracket and a support rib portion formed to protrude from the guide rail so that the support flange is supported.

In addition, the second fixing hole may be formed in the support flange, and an inclined portion inclined downward toward the second fixing hole may be formed on the support flange.

In addition, a separation prevention piece for prevents separation of the cable may be formed on the pulley bracket.

In addition, the stress distribution unit may include an accommodation portion formed on the guide rail and an accommodation protrusion formed to protrude from a rear surface of the pulley bracket to be coupled to the accommodation portion.

In addition, the accommodation portion may be formed as a hole passing through the guide rail, and the accommodation protrusion may be insertion-coupled to the accommodation portion.

In addition, the accommodation portion and the accommodation protrusion may be formed in a cross shape corresponding to each other.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG 1 is a perspective view showing a window regulator according to one embodiment of the present invention as a whole;
FIG 2 is a perspective view for describing the window regulator according to one embodiment of the present invention;
FIG 3 is an exploded perspective view for describing the window regulator according to one embodiment of the present invention;
FIG 4 is a front view for describing the window regulator according to one embodiment of the present invention;
FIG 5 is a rear view for describing the window regulator according to one embodiment of the present invention;
FIG 6 is a cross-sectional view taken along line A-A of FIG 4;
FIG 7 is a cross-sectional view taken along line B-B of FIG 4; and
FIGS. 8A to 8C are views showing an assembly process of the window regulator according to one embodiment of the present invention.

### DETAILED DESCRIPTION OF EXEMPLARY EMBODIMENTS

Hereinafter, a preferred embodiment of a window regulator according to one embodiment of the present invention will be described with reference to the attached drawings. In the process, thicknesses of lines, dimensions of elements, and the like shown in the drawings may be exaggerated for clarity and convenience.

Also, terms described below may be defined in consideration of functions in the present disclosure, and may be changed depending on the customary practice or the intention of a user or operator. Thus, definitions of such terms should be determined based on the overall content of the present specification.

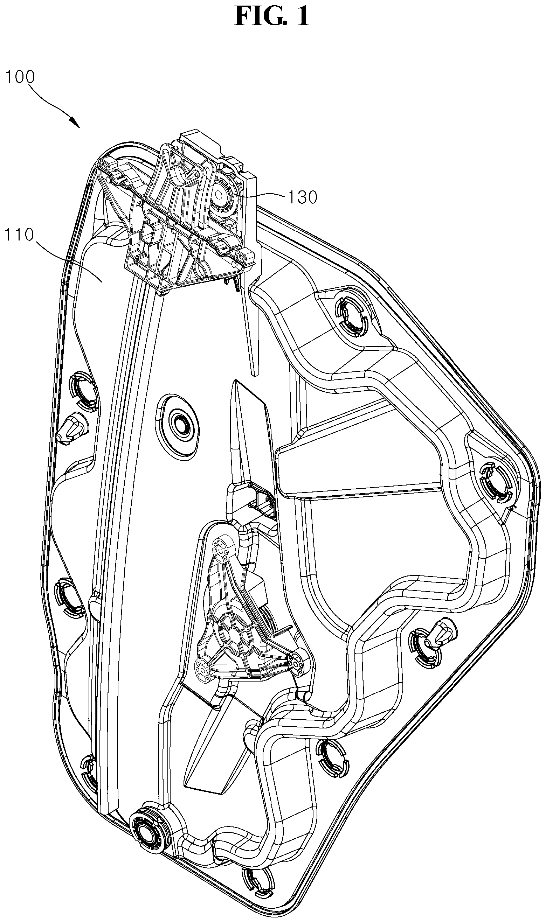

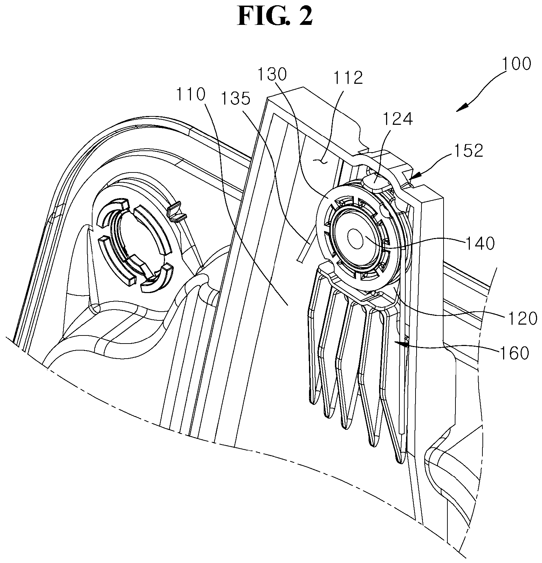

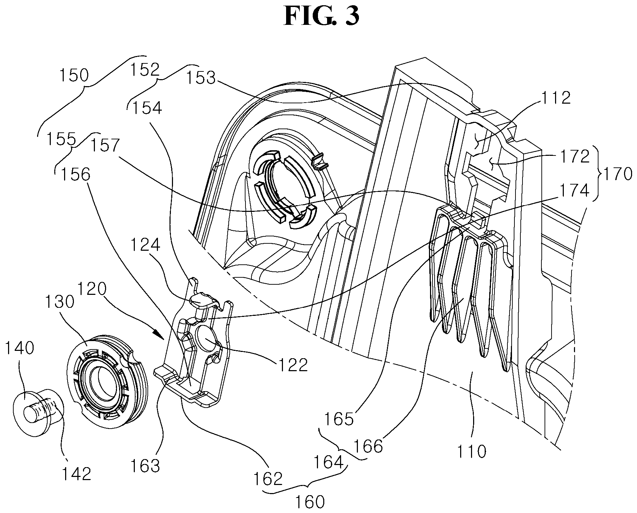

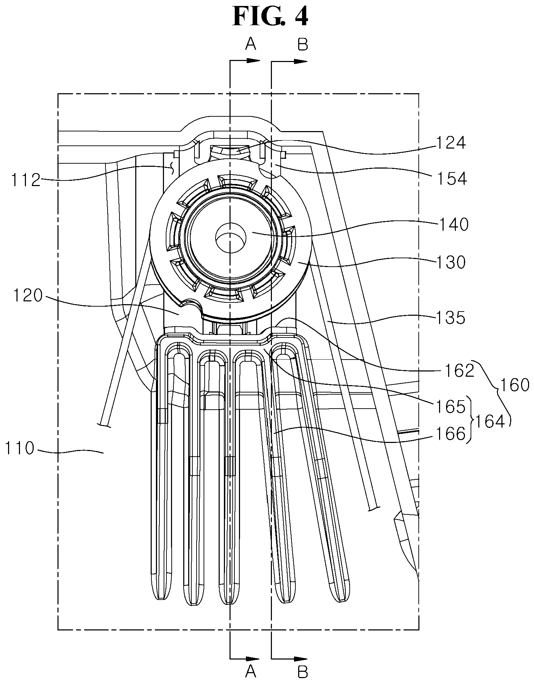

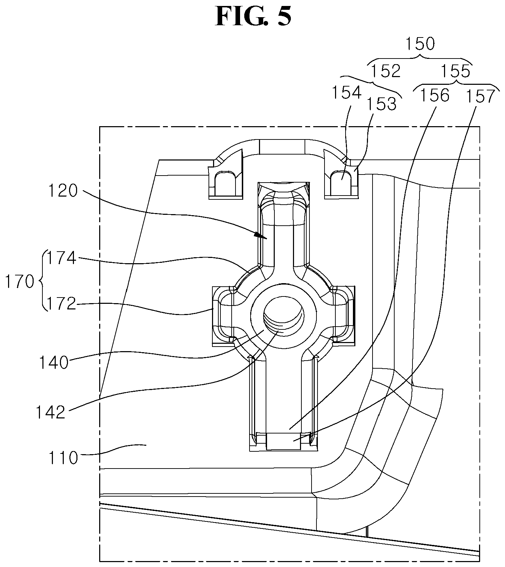

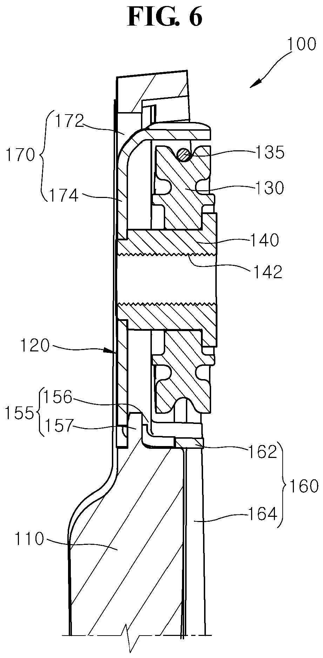

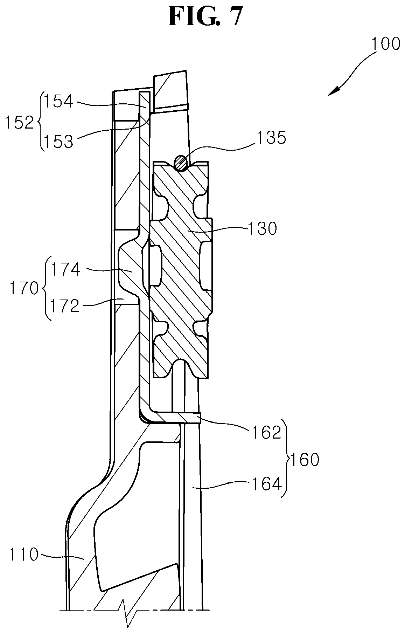

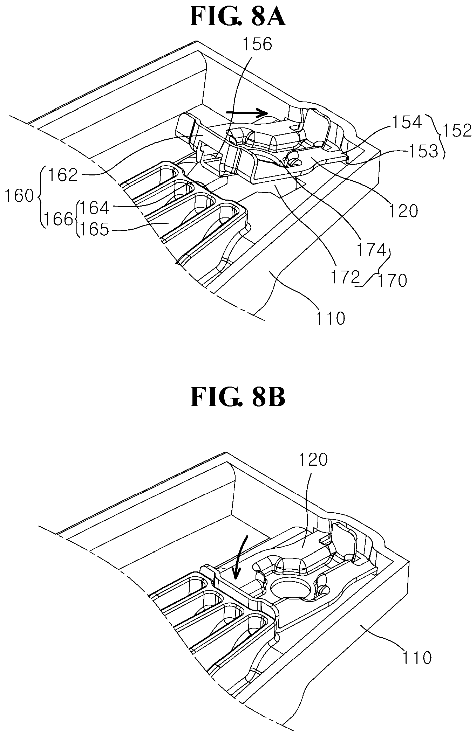

FIG 1 is a perspective view showing a window regulator according to one embodiment of the present invention as a whole, FIG 2 is a perspective view for describing the window regulator according to one embodiment of the present invention, FIG 3 is an exploded perspective view for describing the window regulator according to one embodiment of the present invention, FIG 4 is a front view for describing the window regulator according to one embodiment of the present invention, FIG 5 is a rear view for describing the window regulator according to one embodiment of the present invention, FIG 6 is a cross-sectional view taken along line A-A of FIG 4, FIG 7 is a cross-sectional view taken along line B-B of FIG 4, and FIGS. 8A to 8C are views showing an assembly process of the window regulator according to one embodiment of the present invention.

A window regulator 100 according to one embodiment of the present invention may include a guide rail 110, a pulley bracket 120, and a stress distribution unit 170.

Referring to FIG 1, the guide rail 110 is provided inside a door, formed to vertically extend inside the door, and is provided with a mounting portion 112 on which pulleys 130, which will be described below, may be mounted at an upper end and a lower end, respectively.

The guide rail 110 is provided with a window motor capable of raising and lowering a window, a drum, and a cursor fastened to the window to be raised and lowered.

The guide rail 110 may be made of a synthetic resin material and may be manufactured into various shapes by injection molding.

The mounting portion 112 is formed to correspond to the size of the pulley bracket 120. As shown in FIGS. 2 and 3, the mounting portion 112 may be formed to be recessed in the guide rail 110 to correspond to the size of the pulley bracket 120.

The pulley bracket 120 may be fixed to the guide rail 110, and the pulley 130, which changes the moving direction of the cable 135, may be axially coupled thereto. For example, the pulley bracket 120 may be formed in a plate shape made of a metal material, may have a through hole 122 to which a pulley shaft 140, which will be described below, is coupled formed therein, and may function as a structure to support the pulley 130.

The pulley 130 is rotatably provided by being axially coupled to the front of the pulley bracket 120 by the pulley shaft 140. An end of the pulley shaft 140 may be fixed by being press-fitted into the through hole 122, and a nut 142 may be formed therein so that the pulley shaft 140 is fixed to the in-panel by a fastening member.

Since the pulley shaft 140 and the pulley bracket 120 may distribute a stress by being coupled by press-fitting and may be fixed to the in-panel by applying the nut 142, when the door is assembled, the stress on the guide rail 110 may be minimized due to the coupling of the in-panel and the pulley shaft 140.

The pulley 130 is formed in a disk shape, over which the cable 135 is stretched to change the moving direction of the cable 135, and a groove is formed on an outer peripheral surface thereof to prevent the cable 135 from being separated.

A separation prevention piece 124 for preventing separation of the cable 135 is formed in the pulley bracket 120. The separation prevention piece 124 may be provided at an upper end of the pulley bracket 120, and may be formed to face the outer peripheral surface of the pulley 130 by being bent toward the front of the pulley bracket 120. In this case, a distance between the outer peripheral surface of the pulley 130 and the separation prevention piece 124 may be formed to be smaller than a thickness of the cable 135, thereby preventing the cable 135 from being separated.

The pulley bracket 120 may be fixed to the guide rail 110 by a fixing unit 150.

Referring to FIGS. 3, 6, and 7, the fixing unit 150 may include a first fixing portion 152 fixing an upper end of the pulley bracket 120 and a second fixing portion 155 fixing a lower end of the pulley bracket 120.

The first fixing portion 152 is a component for fixing the pulley bracket 120 to the upper end of the mounting portion 112, and may include a first fixing hole 153 that opens in an upward direction of the guide rail 110 and a first fixing protrusion 154 formed at the upper end of the pulley bracket 120 to be inserted into the first fixing hole 153.

The first fixing protrusion 154 is formed to protrude in the upward direction from both edges of the upper end of the pulley bracket 120, and the first fixing hole 153 is formed to pass through the upper end of the mounting portion 112 so that the first fixing protrusion 154 is inserted.

The second fixing portion 155 is a component for fixing the pulley bracket 120 to the lower end of the mounting portion 112, and may include a second fixing protrusion 157 formed to protrude from the guide rail 110 in the upward direction and a second fixing hole 156 formed in the pulley bracket 120 so that the second fixing protrusion 157 is inserted.

The second fixing hole 156 is formed in the center of the lower end of the pulley bracket 120, and the second fixing protrusion 157 is formed to protrude from the lower end of the mounting portion 112 in the upward direction to be inserted into the second fixing hole 156.

Therefore, the upper end of the pulley bracket 120 is fixed by the first fixing portion 152 and the lower end is fixed by the second fixing portion 155, and when the coupling thereof is released, the pulley bracket 120 may be separated from the guide rail 110.

The fixing unit 150 may include a stress support portion 160 that supports the stress generated by the tension of the cable 135.

The stress support portion 160 may include a support flange 162 formed at the lower end of the pulley bracket 120 and a support rib portion 164 formed to protrude from the guide rail 110 so that the support flange 162 is supported.

The support flange 162 is formed to protrude by being bent toward the front from the lower end of the pulley bracket 120, and the support rib portion 164 is formed integrally with the guide rail 110 to support the support flange 162. That is, the support flange 162 and the support rib portion 164 may be in surface contact with each other, and may function as a configuration that allows the support rib portion 164 to support the load applied to the pulley bracket 120 transferred through the pulley 130.

In more detail, the stress generated in the pulley 130, pulley shaft 140, and guide rail 110 due to the tension of the cable 135 may be supported by the support rib portion 164, which comes into surface contact with and supports the support flange 162, thereby preventing the occurrence of creep rupture of the guide rail 110 due to the stress.

In this case, the support rib portion 164 may be formed of a horizontal rib 165 facing the support flange 162 and a vertical rib 166 extending in a vertical direction of the horizontal rib 165.

It is preferable that the support flange 162 and the support rib portion 164 are formed to protrude to the front as much as the thickness of the pulley 130. This is for supporting a position corresponding to a stress direction so that the stress generated by the tension of the cable 135 may be directly supported.

In addition, the second fixing hole 156 may be formed in the support flange 162, and an inclined portion 163 inclined downward toward the second fixing hole 156 may be formed on the support flange 162.

The second fixing hole 156 not only has the function of fixing the pulley bracket 120 as described above, but may also function as a drain hole. In addition, water flowing in through the inclined portion 163 may be guided to the second fixing hole 156 and drained, and through the drainage, water stagnation may be prevented, thereby preventing corrosion of the pulley bracket 120 made of a metal material.

The stress distribution unit 170 distributes the stress applied to the pulley 130, and may include an accommodation portion 172 formed on the guide rail 110 and an accommodation protrusion 174 formed to protrude from the rear surface of the pulley bracket 120 to be coupled to the accommodation portion 172.

Referring to FIGS. 3 and 5, the accommodation portion 172 is formed as a hole passing through the mounting portion 112 of the guide rail 110. In addition, the accommodation protrusion 174 may be insertion-coupled to the accommodation portion 172.

In the present embodiment, the accommodation portion 172 is shown as a hole, but it is not limited thereto, and may be formed as a recessed groove capable of accommodating the accommodation protrusion 174.

The accommodation protrusion 174 is formed by bending the pulley bracket 120 and is insertion-coupled to the accommodation portion 172 formed as a hole so that the rear surface of the guide rail 110 and the rear surface of the accommodation protrusion 174 may be formed to be the same surface as shown in FIG 6. That is, the cross sections of the guide rail 110 and the pulley bracket 120 may be positioned in a straight line with each other, so that the stress generated by the tension of the cable 135 may be distributed.

As shown, the accommodation portion 172 and the accommodation protrusion 174 may be formed in cross shapes corresponding to each other. Since the accommodation portion 172 and the accommodation protrusion 174 are formed in cross shapes, a large contact area may be formed when being insertion-coupled, thereby improving the stress distribution effect.

In the present embodiment, the shapes of the accommodation portion 172 and the accommodation protrusion 174 are shown as the cross shapes, but are not limited thereto, and may be changed to various shapes capable of forming a wider contact area, and this is nothing more than a simple design change.

Hereinafter, the operation and effect of the window regulator according to one embodiment of the present invention will be described as follows.

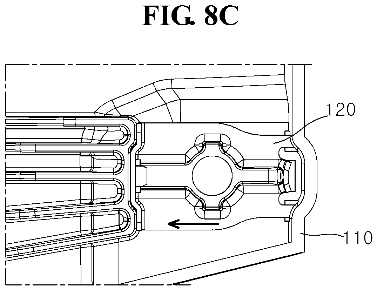

FIG 8 is a view showing an assembly process of the window regulator 100 according to one embodiment of the present invention. Referring to FIG 8, the pulley bracket 120 is mounted on the mounting portion 112 of the guide rail 110. When the first fixing protrusion 154 formed to protrude upward from the upper end of the pulley bracket 120 is inserted into the first fixing hole 153 of the mounting portion 112 as shown in FIG 8A, the pulley bracket 120 is rotated around the first fixing hole 153 and seated as shown in FIG 8B, and then the pulley bracket 120 is lowered downward as shown in FIG 8C, the second fixing protrusion 157 of the guide rail 110 may be inserted into the second fixing hole 156 of the pulley bracket 120 so that the pulley bracket 120 is mounted on the mounting portion 112 of the guide rail 110.

In this way, the pulley bracket 120 may be fixed to the mounting portion 112 using the upper and lower end locking structure provided by the first fixing portion 152 and the second fixing portion 155. In addition, the shape of the pulley bracket 120 may be minimized through simplification of a fixing structure, and assemblability may be improved.

The pulley 130 may be rotatably coupled to the pulley shaft 140 and the pulley shaft 140 may be coupled through the through hole 122 of the pulley bracket 120 by press-fitting and coupled to the in-panel through the nut 142 formed on the inner diameter of the pulley shaft 140, thereby completing the assembly of the pulley 130 that changes the moving direction of the cable 135.

When the door is assembled, the stress applied to the guide rail 110 may be minimized by coupling the in-panel and the pulley shaft 140.

A structure for distributing a stress applied to the pulley 130 of the window regulator 100 according to one embodiment of the present invention will be described.

The accommodation protrusion 174 of the pulley bracket 120 may be insertion-coupled to the accommodation portion 172 formed as a through hole in the mounting portion 112 of the guide rail 110, so that the rear surface of the guide rail 110 and the rear surface of the accommodation protrusion 174 may form the same surface and the stress concentration generated around the pulley 130 may be distributed by a structure in which each cross section is positioned on a straight line (see FIG 6).

That is, the stress concentration may be resolved by a structure in which a portion of the pulley bracket 120 is inserted into the guide rail 110.

The accommodation portion 172 and the accommodation protrusion 174 may be formed in cross shapes so that wider surfaces are in contact with each other, thereby improving a stress distribution effect.

In addition, in the present embodiment, the stress generated in the pulley 130, the pulley shaft 140, and the guide rail 110 due to the tension of the cable 135 may prevent the occurrence of creep rupture of guide rail 110 by the support flange 162 formed at the lower end of the pulley bracket 120 and the support rib portion 164 supporting the support flange 162 by protruding from the guide rail 110.

The support flange 162 and the support guide portion may be formed to protrude to a height corresponding to the thickness of the pulley 130 to directly support the stress generated by the tension of the cable 135, thereby improving durability.

In this case, the second fixing hole 156 that serves as a drain hole may be formed in the support flange 162 to prevent water stagnation, thereby preventing corrosion of the pulley bracket 120.

As described above, according to the present invention, there may be an effect that the occurrence of creep rupture in the guide rail can be prevented by distributing the stress generated by the tension of the cable, and assemblability of the pulley bracket fixing the pulley can be improved by the upper and lower end locking structure of the fixing unit without a separate fastening member.

As described above, a window regulator according to the present invention can prevent creep rupture in a guide rail by distributing a stress generated by tension of a cable.

In particular, the stress concentrated on a pulley shaft can be distributed by a stress distribution unit that allows a part of a pulley bracket to be accommodated in the guide rail, thereby improving durability and ensuring safety.

In addition, the present invention can distribute a stress by transferring tension of a cable to a stress support portion including a support flange and a support rib portion.

In addition, in the present invention, assemblability of a pulley bracket fixing a pulley can be improved by an upper and lower end locking structure by a fixing unit without a separate fastening member.

In addition, in the present invention, in order to prevent rupture of a guide rail, a stress of a guide rail can be minimized by applying a nut to an inner diameter of a pulley shaft to be fixed to an in-panel.

Although the present invention has been described with reference to the embodiments illustrated in the drawings, it is merely exemplary, and it is to be understood to those skilled in the art that various modifications and equivalent other embodiments could be made therefrom.

Therefore, the true technical protection scope of the present invention should be defined only by the claims.

## Claims

1. A window regulator comprising:
a guide rail provided inside a door;
a pulley bracket that is fixed to the guide rail and to which a pulley that changes a moving direction of a cable is axially coupled; and
a stress distribution unit configured to distribute a stress applied to the pulley.

2. The window regulator of claim 1, comprising a fixing unit configured to fix the pulley bracket to the guide rail,
wherein the fixing unit includes:
a first fixing portion that fixes an upper end of the pulley bracket; and
a second fixing portion that fixes a lower end of the pulley bracket.

3. The window regulator of claim 2, wherein the first fixing portion includes:
a first fixing hole opening in an upward direction of the guide rail; and
a first fixing protrusion formed on the upper end of the pulley bracket to be inserted into the first fixing hole, and
the second fixing portion includes:
a second fixing protrusion formed to protrude from the guide rail in the upward direction; and
a second fixing hole formed in the pulley bracket so that the second fixing protrusion is inserted.

4. The window regulator of claim 3, wherein the fixing unit further includes a stress support portion that supports a stress generated by tension of the cable.

5. The window regulator of claim 4, wherein the stress support portion includes:
a support flange formed at the lower end of the pulley bracket; and
a support rib portion formed to protrude from the guide rail so that the support flange is supported.

6. The window regulator of claim 5, wherein the second fixing hole is formed in the support flange, and
an inclined portion inclined downward toward the second fixing hole is formed on the support flange.

7. The window regulator of claim 1, wherein a separation prevention piece for preventing separation of the cable is formed on the pulley bracket.

8. The window regulator of claim 1, wherein the stress distribution unit includes:
an accommodation portion formed on the guide rail; and
an accommodation protrusion formed to protrude from a rear surface of the pulley bracket to be coupled to the accommodation portion.

9. The window regulator of claim 8, wherein the accommodation portion is formed as a hole passing through the guide rail, and
the accommodation protrusion is insertion-coupled to the accommodation portion.

10. The window regulator of claim 9, wherein the accommodation portion and the accommodation protrusion are formed in a cross shape corresponding to each other.
